Europäisches Patentamt

European Patent Office

Office européen des brevets

(19)

(11) EP 0 915 350 A2

(12) EUROPÄISCHE PATENTANMELDUNG

(43) Veröffentlichungstag:
12.05.1999 Patentblatt 1999/19

(51) Int. Cl.⁶: $G01S\ 13/93$, $G01S\ 13/86$

(21) Anmeldenummer: 98119664.5

(22) Anmeldetag: 17.10.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 06.11.1997 DE 19749086

(71) Anmelder: DaimlerChrysler AG
70567 Stuttgart (DE)

(72) Erfinder:
• Franke, Uwe Dr.
73066 Uhingen (DE)
• Zomotor, Zoltan
70619 Stuttgart (DE)

(54) **Vorrichtung zur Ermittlung fahrspurverlaufsindikativer Daten**

(57)    Die Erfindung bezieht auf eine Vorrichtung zur Ermittlung von für den Verlauf einer Fahrspur indikativen Daten, die eine Fahrspurerkennungssensorik, eine Objektpositionssensorik, die wenigstens den Abstand eines vor dem Fahrzeug befindlichen Objektes und dessen Richtungswinkel bezüglich der Fahrzeugbewegungsrichtung erfaßt, und eine Fahrzeugeigenbewegungssensorik beinhaltet.

Erfindungsgemäß ist eine Schätzeinrichtung vorgesehen, der die Fahrspurerkennungsmeßdaten, die Objektpositionsmeßdaten und die Fahrzeugeigenbewegungsmeßdaten zugeführt werden und die in Abhängigkeit davon die Fahrspurkrümmung und/oder die Querposition eines jeweiligen Objektes vor dem Fahrzeug relativ zur Fahrspur durch Schätzung mittels eines vorgebbaren, ein dynamisches Fahrzeugbewegungsmodell beinhaltenden Schätzalgorithmus ermittelt. Vorzugsweise beinhaltet die Vorrichtung hierzu ein Kalman-Filter.

Verwendung z.B. in Straßenfahrzeugen.

Fig. 1

**Beschreibung**

Die Erfindung bezieht sich auf eine Vorrichtung zur Ermittlung von für den Verlauf einer Fahrspur, beispielsweise einer Straße, indikativen Daten nach dem Oberbegriff des Anspruchs 1.

Diese Vorrichtung beinhaltet zum einen eine den Fahrspurbereich vor dem Fahrzeug erfassende Fahrspurerkennungssensorik, welche Fahrspurerkennungsmeßdaten z.B. in Form von Fahrspurmarkierungskoordinaten liefert. Derartige Sensoriken sind beispielsweise als optische Spurerkennungseinrichtungen bekannt, die ein Bildaufnahmesystem und ein nachgeschaltetes Bildverarbeitungssystem beinhalten, wie in den Patentschriften DE 43 32 836 C1 und EP 0 446 903 B1 sowie der Offenlegungsschrift DE 42 21 015 A1 offenbart. Sie werden insbesondere zur selbsttätigen Steuerung der Längs- und/oder der Querbewegung von Fahrzeugen im Rahmen einer Anstandsregeleinrichtung und/oder eines automatischen Fahrzeuglenksystems verwendet. Die maximale Entfernung, in der Fahrspurmarkierungen von einer solchen Sensorik noch zuverlässig detektiert werden können, d.h. deren Sichtweite, ist aufgrund mehrerer Faktoren beschränkt, wie der Einbauhöhe einer zugehörigen Videokamera im Fahrzeug, den Witterungsbedingungen, der Tageszeit, dem Verschmutzungsgrad der Fahrspur usw. Bei zu geringer Sichtweite ist eine autonome Fahrzeugführung allein mit diesen Mitteln nicht mehr zuverlässig möglich. Auch reine Abstandsregeleinrichtungen benötigen den Fahrspurverlauf in größerer Entfernung, z.B. bis mindestens etwa 150m, mit ausreichend hoher Genauigkeit. Eine Extrapolation des Fahrspurverlaufs in dieser Entfernung aus dem durch rein optische Spurerkennung im Nahbereich erkannten Verlauf erweist sich zumindest bei geringer Sichtweite als nicht zufriedenstellend.

Zum anderen beinhaltet die Vorrichtung außerdem eine Objektpositionssensorik, welche wenigstens den Abstand eines vor dem Fahrzeug befindlichen Objektes, z.B. ein vorausfahrendes Fahrzeug oder ein stationär am Fahrspurrand befindliches Objekt, sowie den Winkel erfaßt, in welchem dieses Objekt bezüglich der eigenen Fahrzeugbewegungsrichtung erscheint. Solche Sensoriken werden insbesondere in Abstandsregeleinrichtungen eingesetzt, um einen konstanten Abstand zu einem vorausfahrenden Fahrzeug einzuhalten. Die hier verwendeten Techniken, wie Abstandserfassung mittels Laser- oder Radarstrahl, haben den Vorteil, daß sie auch bei geringerer optischer Sichtweite noch für größere Entfernungen zuverlässige Meßresultate liefern, jedoch erlauben diese Meßdaten allein keine Bestimmung des Fahrbahnverlaufs.

Es wurden bereits Vorrichtungen der eingangs genannten Art vorgeschlagen, bei denen eine auf Radar basierende Objektpositionssensorik zur Erkennung vorausfahrender Fahrzeuge und als Unterstützung dieses Fahrzeugverfolgungsradars ein optisches Bildaufnahme- und Bildverarbeitungssystem vorgesehen ist, um die Position von Objekten vor dem eigenen Fahrzeug als Hilfestellung zum Radarsystem zu schätzen. Wenn jedoch beispielsweise wegen schlechter Sicht das optische System keine zuverlässigen Positionsdaten liefert, reduziert sich die Leistungsfähigkeit des Gesamtsystems wiederum auf diejenige des Radarsystems.

Es ist an sich bekannt, in Fahrzeuganwendungen zur Berechnung bestimmter fahrzeugbezogener Größen, z.B. des Schwimmwinkels und anderer Fahrdynamikgrößen, Schätzeinrichtungen in Form sogenannter Beobachter oder Kalman-Filter einzusetzen. Bezüglich dieses Einsatzes von Schätz- bzw. Beobachterkonzepten in Fahrzeugsystemen sei z.B. auf die Offenlegungsschrift DE 196 07 429 A1 und die dort zitierte Literatur verwiesen.

Der Erfindung liegt als technisches Problem die Bereitstellung einer Vorrichtung der eingangs genannten Art zugrunde, mit der vergleichsweise zuverlässig fahrspurverlaufsindikative Daten in Echtzeit auch bei ungünstigen Umgebungsbedingungen erhalten werden können und die insbesondere eine zuverlässige Erfassung der Fahrspurkrümmung und/oder der Querposition von Objekten vor dem Fahrzeug bezogen auf die Fahrspur ermöglicht.

Die Erfindung löst dieses Problem durch die Bereitstellung einer Vorrichtung mit den Merkmalen des Anspruchs 1. Diese Vorrichtung beinhaltet eine Schätzeinrichtung, der die Fahrspurerkennungsmeßdaten von der optischen Fahrspurerkennungssensorik und die Objektpositionsmeßdaten der Objektpositionssensorik zugeführt werden und die in Abhängigkeit von diesen Meßdaten die Fahrspurkrümmung und/oder die Position des jeweils erkannten Objektes vor dem Fahrzeug relativ zur Fahrspur durch Schätzung unter Verwendung eines vorgebbaren, ein dynamisches Fahrzeugbewegungsmodell beinhaltenden Schätzalgorithmus ermittelt. Die Schätzeinrichtung kann insbesondere ein sogenannter Beobachter oder ein Kalman-Filter sein. Da in die Schätzeinrichtung die Ausgangssignale sowohl der Fahrspurerkennungssensorik als auch der Objektpositionssensorik eingehen, wird dort eine nichttriviale Fusion beider Sensorfunktionalitäten durch den Schätzalgorithmus erreicht, die zur Folge hat, daß selbst bei zeitweiligem Ausfall der einen oder der anderen Sensorik noch eine zuverlässige Schätzung des Fahrspurverlaufs bzw. der Querlage von Objekten vor dem eigenen Fahrzeug bezogen auf die Fahrspur möglich ist, wobei die Genauigkeit im allgemeinen merklich höher ist als bei einer bloßen Anordnung beider Sensoriken ohne sensorfusionierende Schätzeinrichtung.

Bei einer nach Anspruch 2 weitergebildeten Vorrichtung gehen die geometrischen Beziehungen zwischen den von der Fahrspurerkennungssensorik und der Objektpositionssensorik erfaßten Meßgrößen als Meßgleichungen und deren dynamische Beziehungen als Zustandsgrößen-Differentialgleichungen in den Schätzalgorithmus ein. Dabei geht die Querposition eines jeweils vor dem Fahrzeug erkannten Objektes bezüglich der Fahrspur als zeitlich konstante Zustandsgröße in das Differenzialgleichungssystem ein. Dieses Modell eignet sich besonders in Realisierungen, in denen die Objektpositionssensorik unmittelbar den Richtungswinkel und den Abstand der Objekte und nicht nur diesbezügliche Rohdaten liefert, so daß die Zuordnung der Objekte zu den Objektzuständen und deren korrespondierenden Meßgleichungen direkt gegeben ist. Wenn dies nicht der Fall ist, ist eine Weiterbildung der Erfindung nach Anspruch 3 vorteilhaft, bei der zusätzlich der Objektabstand und dessen Änderungsgeschwindigkeit als Zustandsgrößen in das Differentialgleichungssystem eingehen, wobei darin die Abstandsänderungsgeschwindigkeit als zeitlich konstante Größe behandelt wird.

In weiterer Ausgestaltung der Erfindung nach Anspruch 4 besteht die Schätzeinrichtung aus einem Kalman-Filter.

Vorteilhafte Ausführungsformen der Erfindung sind in den Zeichnungen dargestellt und werden nachfolgend beschrieben. Hierbei zeigen:

Fig. 1     eine schematische Darstellung einer Straßenverkehrssituation mit einem erfindungsgemäß ausgerüsteten Personenkraftwagen und einem vorausfahrenden Personenkraftwagen,

Fig. 2     ein schematisches Blockdiagramm der im hinteren Personenkraftwagen von Fig. 1 implementierten Vorrichtung zur Ermittlung fahrspurverlaufsindikativer Daten,

Fig. 3     ein Diagramm zur Veranschaulichung von durch die Vorrichtung nach Fig. 2 ermittelten Fahrspurkrümmungen und

Fig. 4     ein Diagramm zur Veranschaulichung der durch die Vorrichtung nach Fig. 2 ermittelten Querposition des vorausfahrenden Fahrzeugs.

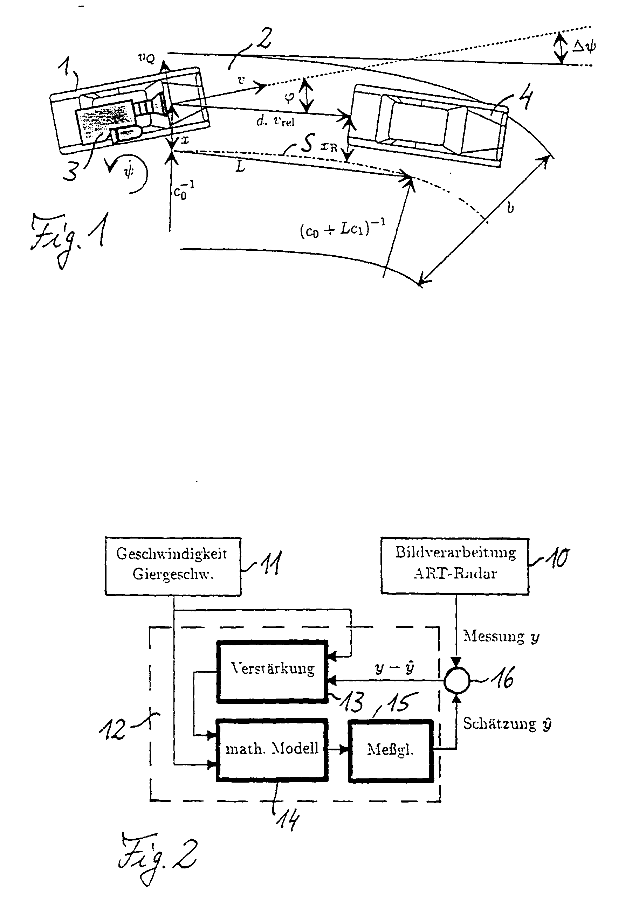

Fig. 1 zeigt eine Verkehrssituation, bei der sich ein Personenkraftwagen 1 mit einer Längsgeschwindigkeit v, einer Quergeschwindigkeit $v_Q$ und einer Giergeschwindigkeit $\dot{\psi}$ auf einer Fahrspur 2 einer Straße bewegt. Das Fahrzeug 1 ist mit einer Vorrichtung 3 zur Ermittlung fahrspurverlaufsindikativer Daten, insbesondere der Krümmung der Fahrspur 2 im Bereich vor dem Fahrzeug 1 sowie der bezüglich der Fahrspurmitte gemessenen Querposition $x_R$ eines jeweiligen, vor dem Fahrzeug 1 befindlichen Objektes, wie des vorausfahrenden Personenkraftwagens 4, ausgerüstet. Diese Vorrichtung 3 beinhaltet zum einen eine herkömmliche Objektpositionssensorik auf Radarbasis, mit welcher der Richtungswinkel $\varphi$ zwischen der Richtung, unter der das vor dem Fahrzeug 1 befindliche Objekt 4 bezüglich der Längsrichtung des eigenen Fahrzeugs 1 erscheint, sowie der Abstand d und die Relativgeschwindigkeit $v_{rel}$ des Objektes 4, nachfolgend als Radarobjekt bezeichnet, erfaßt werden. Mit $\Delta\psi$ ist der relative Gierwinkel, d.h. der Winkel der Fahrzeuglängsrichtung zur Fahrspurtangente bezeichnet. Die Fahrspurbreite ist mit b angegeben. Die Fahrspurkrümmung ist mit $c_0$ und die Krümmungsänderung mit $c_1$ bezeichnet. Gut ausgebaute Straßen sind so ausgelegt, daß sich die Fahrspurkrümmung $c_0$ annäherungsweise proportional mit der konstanten Rate $c_1$ ändert, d.h. die Krümmung $c_0(L)$ im Abstand L ist gegeben durch $c_0(L)=c_0(0)+c_1 L$. Die Querposition des eigenen Fahrzeugs 1 bezüglich der Fahrspurmitte S ist mit x und diejenige des Radarobjektes mit $x_R$ bezeichnet.

Die Vorrichtung 3 zur Ermittlung fahrspurverlaufsindikativer Daten beinhaltet des weiteren eine herkömmliche Fahrzeugeigenbewegungssensorik, mit der die Meßgrößen des eigenen Fahrzeugs 1 erfaßt werden, wie Längsgeschwindigkeit v, Quergeschwindigkeit $v_Q$ und Giergeschwindigkeit $\dot{\psi}$, sowie eine herkömmliche Fahrspurerkennungssensorik in Form eines optischen Bildaufnahme- und Bildverarbeitssystems. Dieses System beinhaltet als bildaufnehmendes Element eine Videokamera mit den Brennweitenparametern $f_x$ und $f_y$ in Längs- bzw. Querrichtung, wobei die Kamera auf einer Höhe H über der Fahrbahn unter einem Nickwinkel $\alpha$ angeordnet ist. Wird zusätzlich ein Parameter a mit einem Wert von -0,5 für die Markierung des linken Fahrspurrandes und einem Wert von +0,5 für die Markierung des rechten Fahrspurrandes eingeführt, so gelten zwischen den Kamerabildkoordinaten $x_B$, $y_B$ der Fahrspurrandmarkierung in einer Entfernung L die Beziehungen

$$x_B=f_x(ab-x-\Delta\psi L+c_0 L^2/2+c_1 L^3/6/L \text{ und}$$

$$L=H(1-y_B\tan\alpha/f_y)/(y_B/f_y+\tan\alpha).$$

Die unbekannten Größen in der obigen Beziehung für die Kamerabildkoordinate $x_B$ können mittels Parameterschätzverfahren, wie z.B. der Methode der kleinsten Quadrate, bestimmt werden, wenn eine ausreichende Anzahl von Bildkoordinaten $x_B$, $y_B$ verschiedener Fahrbahnmarkierungen durch die Bildverarbeitung ermittelt worden sind. Bessere Ergebnisse werden jedoch durch die Anwendung einer Beobachter- bzw. Kalman-Filtertechnik erhalten, bei welcher für die Schätzung die kinematischen Kopplungen und dynamischen Bedingungen der relevanten Parameter berücksichtigt werden. Dabei lassen sich durch das Schätzverfahren die Sensorinformationen aus der Fahrspurerkennungssensorik und der Objektpositionssensorik in verschiedenen Varianten unterschiedlich stark fusionieren, wobei auf die verschiedenen Varianten unten näher eingegangen wird. Die Vorgehensweise basiert jeweils darauf, daß zunächst die physikalischen Zusammenhänge bestimmt und dann in systemtheoretischer Form mit einem linearen Prozeßmodell der Form

$$\dot{\underline{x}}=A\underline{x}+B\underline{u}$$

sowie einer nichtlinearen Meßgleichung der Form

$$\underline{y}=\underline{h}(\underline{x})$$

dargestellt werden, wie für Beobachter bzw. Kalman-Filter geläufig, wobei $\underline{x}$ den Zustandsgrößenvektor, $\underline{y}$ den Meßgrößenvektor, $\underline{u}$ und $\underline{h}(\underline{x})$ aus den für das betreffende System geltenden Beziehungen zu ermittelnde Vektorfunktionen sowie A und B zugehörige Matrizen bezeichnen. Ein Vergleich mit den obigen Beziehungen ergibt als Zustandsgrößenvektor $\underline{x}=(x,\Delta\psi,c_0,c_1,\alpha,b)^T$, als Meßgrößenvektor den einzeiligen Vektor $\underline{y}=(x_B)$ und für $\underline{h}$ die Beziehung $\underline{h}(\underline{x})=f_x(ab-x-\Delta\psi L+c_0 L^2/2+c_1 L^3/6)L$. Dabei sind von der $6\times6$-Matrix A nur die Matrixelemente $A_{12}=-A_{23}=A_{34}=v$ und von der $2\times2$-Matrix B nur die Elemente $B_{11}=B_{22}=1$ ungleich null, während die übrigen Matrixelemente null sind. Der Vektor $\underline{u}$ ergibt sich zu $\underline{u}=(v_Q,\psi)$.

Es versteht sich hierbei, daß jedes Paar von gemessenen Bildkoordinaten $(x_B, y_B)$ der Fahrspurmarkierungen eine Meßgleichungszeile der Form $\underline{y}=\underline{h}(\underline{x})$ ergibt.

Im Rahmen einer einfachen Fusion der Sensordaten läßt sich die Querposition $x_R$ eines Radarobjektes in der Entfernung d und unter dem Winkel $\varphi$ durch die Beziehung

$$x_R=\varphi d+x+\Delta\psi d-c_0 d^2/2-c_1 d^3/6 \tag{G1}$$

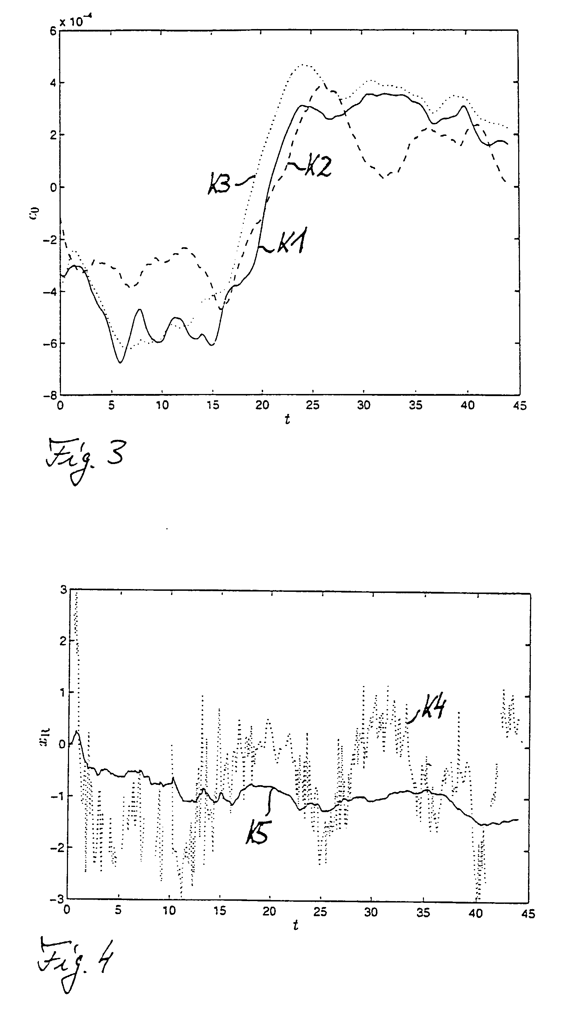

annähern, wobei in diese Beziehung die Fahrspurdaten der Querposition x und des Richtungswinkels $\Delta\psi$ des eigenen Fahrzeugs 1 relativ zur Fahrspur sowie die Fahrspurkrümmungsparameter $c_0$ und $c_1$ eingehen. Vorzugsweise findet eine komplexere Fusion der Sensorausgangsdaten statt, wie nachfolgend näher erläutert. Fig. 2 zeigt eine auch für eine solche komplexere Sensorfusionstechnik geeignete Vorrichtung.

Die Vorrichtung von Fig. 2 beinhaltet die erforderliche Fahrspurerkennungs- und Objektpositions-Sensorikeinheit 10, welche die Meßwerte der Meßgrößen $\underline{y}$ liefert. Die Fahrspurerkennungssensorik ist, wie gesagt, von einem Bildaufnahme- und Bildverarbeitungssystem gebildet, kann jedoch alternativ auch durch andere Einrichtungen mit fahrspurerkennender Funktion realisiert sein, z.B. ein auf Induktionsschleifen oder magnetischen Nägeln entlang der Fahrspur basierendes System oder ein auf dem sogenannten GPS (Glabal Positioning System) basierenden System zur genauen Erfassung der Fahrzeugposition. Die Objektpositionssensorik ist im gezeigten Beispiel durch den Radarteil eines Abstandsregeltempomaten (ART) realisiert, es kann jedoch zu diesem Zweck der Erkennung der Position von Objekten vor dem Fahrzeug und insbesondere von vorausfahrenden Fahrzeugen auch ein anderes herkömmliches System zum Einsatz kommen, welches den Abstand solcher Objekte und den Winkel erfaßt, unter dem die Objekte jeweils erscheinen. Des weiteren weist die Vorrichtung eine Fahrzeugeigenbewegungssensorik 11 auf, die unter anderem die Längsund Quergeschwindigkeit v, $v_Q$ des eigenen Fahrzeugs und dessen Giergeschwindigkeit $\psi$ erfaßt.

Als zentralen Bestandteil beinhaltet die Vorrichtung von Fig. 2 ein Kalman-Filter 12 üblichen Aufbaus mit einer Verstärkungsstufe 13, einer Modellrechenstufe 14 und einer Meßgleichungsstufe 15. Am Ausgang der Meßgleichungsstufe 15 wird der Schätz-Meßgrößenvektor $\hat{\underline{y}}$ als Ausgangssignal abgegeben, der in einem Subtrahierer 16 von den Meßwerten des Meßgrößenvektors $\underline{y}$ subtrahiert wird. Die daraus resultierende Differenz $\underline{y}-\hat{\underline{y}}$ wird einem Eingang der Verstärkungsstufe 13 zugeführt, der an einem zweiten Eingang das Ausgangssignal der Fahrzeugeigenbewegungssensorik 11 zugeführt wird. Das Ausgangssignal der Fahrzeugeigenbewegungssensorik 11 wird parallel dazu einem Eingang der Modellrechenstufe 14 zugeführt, welcher an einem zweiten Eingang das Ausgangssignal der Verstärkungsstufe 13 zugeführt wird. Das Ausgangssignal der Modellrechenstufe 14 wird der Meßgleichungsstufe 15 zugeführt, die daraus den Schätz-Meßgrößenvektor $\hat{\underline{y}}$ generiert. Durch die Verknüpfung, d.h. Fusion, der Ausgangssignale der Objektpositionssensorik und der Fahrspurerkennungssensorik mittels dieser Kalman-Filtertechnik macht es möglich, gleichzeitig sowohl die Fahrspurerkennung als auch die Spurzuordnung der Radarobjekte zu verbessern.

In einer ersten weiterentwickelten Variante der oben erläuterten einfachen Sensorfusion werden die Daten der Objektpositionssensorik, d.h. des Radars, zwecks Verbesserung der Spurschätzung dahingehend verwendet, daß die nicht direkt meßbare Querposition $x_R$ eines jeweiligen Radarobjektes als eine Zustandsgröße in den Schätzalgorithmus eingeführt wird. Als Modell für diese Querposition $x_R$ wird angenommen, daß Radarobjekte, auch vorausfahrende Fahrzeuge, im zeitlichen Mittel ihre Lage bezüglich der Fahrspur beibehalten, so daß die Zustandsdifferentialgleichungen für jedes Radarobjekt um die Gleichung $\dot{x}_R=0$ erweitert werden. Außerdem wird die sich aus der obigen Beziehung für die Querposition $x_R$ eines jeweiligen Radarobjektes ergebende Beziehung

$$\varphi=-x/d-\Delta\psi+c_0 d/2+c_1 d^2/6+x_R/d$$

für den Radarobjekt-Richtungswinkel $\varphi$ als eine zusätzliche Meßgleichung genutzt. Tatsächlich gemessen werden vom Abstandsradar der Abstand d, die Relativgeschwindigkeit $v_{rel}$ und der Richtungswinkel $\varphi$. Für jedes Radarobjekt erweitern sich somit der Zustandsgrößenvektor $\underline{x}$ um die jeweilige Querposition $x_R$ des betreffenden Radarobjektes, während der Vektor $\underline{u}$ unverändert bleibt und die Matrizen A und B nur um weitere Matrixelemente mit dem Wert null erweitert werden. Zudem erweitert sich die systemtheoretische Meßgleichung pro Radarobjekt um je eine weitere Zeile der Form

$$y=\varphi \quad \text{mit} \quad h(\underline{x})=-x/d-\Delta\psi+c_0 d/2+c_1 d^2/6+x_R/d .$$

Dabei wurde der Übersichtlichkeit halber von der Einführung weiterer Indizes für das jeweilige Radarobjekt abgesehen. Die damit realisierte Vorrichtung ist zur Ermittlung des Fahrspurverlaufs vor dem eigenen Fahrzeug und der Querposition von dort detektierten Objekten unter Nutzung des Schätzalgorithmus mittels Kalman-Filter besonders für diejenigen Anwendungsfälle geeignet, in denen vom Abstandsradar der Abstand d und der Richtungswinkel $\varphi$ zu jedem Radarobjekt geliefert werden, so daß die Zuordnung zu den Radarobjekt-Zuständen, d.h. insbesondere zu deren Querposition $x_R$ relativ zur Fahrspur, und zu deren korrespondierenden Meßgleichungen direkt gegeben ist. In realen Systemen liefert das Abstandsradar jedoch zunächst nur Radarrohziele, d.h. Sätze zusammengehöriger Messungen des Abstands d, der Relativgeschwindigkeit $v_{rel}$ und des Richtungswinkels $\varphi$, aus denen dann erst die Radarobjekte als gespeicherte Objekte durch Zielverfolgung von Radarrohzielen, d.h. durch Zuordnung aktueller Messungen zu gespeicherten Objekten, die ihrerseits früheren, gefilterten Messungen entsprechen, erzeugt werden.

In diesem Fall kann die Vorrichtung von Fig. 2 in einer noch weiter entwickelten Variante so ausgelegt sein, daß die Radarobjekte im Sensorfusionssystem selbst erzeugt werden. Dazu wird dann der Schätzalgorithmus im Kalman-Filter 12 wie folgt erweitert. Pro Radarobjekt werden zusätzlich der Abstand $d_R$ und die Relativgeschwindigkeit $V_{relR}$ als Zustandsgrößen eingeführt, für welche die kinematischen Zustandsdifferentialgleichungen

$$\dot{d}_R = v_{relR} \quad \text{und} \quad \dot{v}_{relR}=0$$

angesetzt werden. Die Zustände $d_R$ und $V_{relR}$ werden direkt gemessen, so daß der geometrische Zusammenhang zwischen diesen Zustandsgrößen $d_R$, $v_{relR}$ und den Meßgrößen d, $v_{rel}$ durch $d=d_R$ bzw. $v_{rel}=v_{relR}$ gegeben ist. Pro Radarobjekt erweitert sich somit der Zustandsgrößenvektor $\underline{x}$ um den dreizeiligen Vektor $(x_R,d_R,v_{relR})^T$, wobei wiederum der Übersichtlichkeit halber ein weiterer Index zur Unterscheidung der verschiedenen Radarobjekte weggelassen ist. Außerdem erweitert sich dementsprechend die Matrix A in der Hauptdiagonalen um eine 3×3-Matrix, bei der nur das Element der zweiten Zeile und dritten Spalte den Wert eins hat, während die übrigen Matrixelemente null sind. Der Vektor $\underline{u}$ bleibt unverändert. Die systemtheoretische Meßgleichung erweitert sich hingegen pro Radarobjekt um den Zusatz-Meßgrößenvektor $\underline{y}_z=(\varphi,d,v_{rel})^T$ und um drei entsprechende zusätzliche Zeilen

$$\underline{h}_z(\underline{x})=(-x/d_R-\Delta\psi+c_0 d_R/2+c_1 d_R^2/6+x_R/d_R,d_R,v_{relR})^T$$

zu der Funktion $\underline{h}(\underline{x})$. Die Zielverfolgung kann z.B. dadurch realisiert werden, daß die Radarrohziele mit Hilfe eines $3\sigma$-Tests für die drei Meßgrößen $\varphi$,d und $v_{rel}$ des Abstandsradars den Radarobjekten zugeordnet werden. Ein solcher $3\sigma$-Test ist beispielsweise in der Dissertation von B. Mysliwetz, Parallelrechnerbasierte Bildfolgen-Interpretation zur autonomen Fahrzeugsteuerung, Universität der Bundeswehr München, 1990 beschrieben. Bei Bedarf kann für den Filterentwurf ein erweitertes Kalman-Filter Verwendung finden, bei dem additiv zum Zustandsdifferentialgleichungssystem stochastisches Prozeßrauschen und zum Meßgleichungssystem stochastisches Meßrauschen hinzuaddiert werden. Zur weiteren Behandlung, einschließlich Diskretisierung und Faktorisierung, eines solchen erweiterten kontinuierlichen Kalman-Filters kann auf die Literatur verwiesen werden, siehe z.B. V. Krebs, Nichtlineare Filterung, R. Oldenburg Verlag, München, 1980 und Bierman, Factorization Methods for Discrete Sequential Estimation, Academic Press, New York, 1977.

Im Diagramm von Fig. 3 sind Resultate bezüglich der Schätzung des Fahrspurverlaufs, speziell über den Wert der geschätzt ermittelten Spurkrümmung $c_0$ in Abhängigkeit von der Zeit t während eines beispielhaften Fahrabschnitts dargestellt. Dabei werden die Resultate gemäß der oben erwähnten einfachen Sensorfusion mit den Resultaten der zuletzt beschriebenen Systemauslegung mit einer Sensorfusion mit drei Zuständen pro Radarobjekt im Kalman-Filter verglichen. In Fällen guter Sichtweite von beispielsweise mehr als etwa 60m sind die Ergebnisse für beide Systemauslegungen näherungsweise gleich und durch die gemeinsame, durchgezogen gezeichnete Kennlinie K1 veranschaulicht, die folglich als Referenz für den Fall schlechter Sichtweite dienen kann. Zum Vergleich wurde derselbe Fahrspurabschnitt nochmals für den Fall einer schlechten Sichtweite von nur etwa 20m durchfahren. Die gestrichelte Kennlinie K2 zeigt dann das Ergebnis der einfachen Sensorfunktion ohne Verwendung der Abstandsradardaten zur Verbesserung der Spurschätzung, während die gepunktet dargestellte Kennlinie K3 das Resultat des komplexen Sensorfusionssystems mit drei Zuständen pro Radarobjekt für die Zustandsschätzung wiedergibt. An den Werten für $c_0$ ist ablesbar, daß der befahrene Fahrspurabschnitt zunächst in den ersten 20 Sekunden eine Linkskurve war, die dann in eine Rechtskurve überging.

Aus Fig. 3 ist des weiteren ersichtlich, daß bei schlechter Sichtweite die Schätzung der Fahrspurkrümmung $c_0$

durch das System mit komplexerer Sensorfusion dem Referenzverlauf gemäß der Kennlinie K1 deutlich näher kommt als das Ergebnis der rein optischen Spurerkennung mit nur einfacher Sensorfusion gemäß der Kennlinie K2. Außerdem ist ein Voreilen der vom System mit komplexerer Sensorfusion bei schlechter Sichtweite geschätzten Spurkrümmung gegenüber der von den beiden betrachteten Systemen bei guter Sichtweite geschätzten Spurkrümmung beim Übergang von der Links- in die Rechtskurve zu beobachten. Dies kann als Vergrößerung der Sichtweite mit Hilfe des oder der detektierten Radarobjekte interpretiert werden. Bei guter Sichtweite tritt dieser Voreil-Effekt deshalb nicht so stark in Erscheinung, weil es dann mehr Meßpunkte aus der optischen Fahrspurerkennungssensorik gibt und die Messung des Radarobjekts somit nicht so stark ins Gewicht fällt.

Im Diagramm von Fig. 4 sind Ergebnisse der beiden zu Fig. 3 betrachteten Systemauslegungen bezüglich der Ermittlung der Querposition $x_R$ eines vorausfahrenden, detektierten Radarobjektes, d.h. speziell eines vorausfahrenden Fahrzeuges, mittels Schätzung veranschaulicht. Dabei variierte der Abstand dieses Objektes zum eigenen Fahrzeug zwischen etwa 85m und 115m. Die punktiert gezeichnete, stärker verrauschte Kennlinie K4 stellt das Resultat für die geschätzte Querposition $x_R$ in Abhängigkeit von der Zeit t für den beispielhaften Fahrabschnitt bei schlechter Sichtweite dar, wie es von dem System mit einfacher Sensorfusion erhalten wird, indem die Radarobjekt-Querposition $x_R$ unter Verwendung ungefilteter Abstandsradarmessungen anhand der obigen Näherungsgleichung G1 für $x_R$ berechnet wird. Die durchgezogene, glattere Kennlinie K5 zeigt hingegen für dieselbe Fahrsituation das Ergebnis der Schätzung der Radarobjekt-Querposition $x_R$ durch das System mit komplexerer Sensorfusion, bei welchem diese Querposition $x_R$ neben dem Radarobjektabstand $d_R$ und der Objektrelativgeschwindigkeit $v_{relR}$ als Zustandsgröße in das Kalman-Filter eingeht.

Während für den nicht dargestellten Fall guter Sichtweite durch eine Tiefpaßfilterung der verrauschteren Kennlinie des Systems mit einfacher Sensorfusion ähnliche Ergebnisse erhalten werden wie durch das System mit komplexerer Sensorfusion, ergibt sich bei schlechter Sichtweite, daß in dieser Situation nur das System mit komplexerer Sensorfusion noch ein Resultat für die geschätzt ermittelte Radarobjekt-Querposition $x_R$ ähnlich demjenigen bei guter Sichtweite liefert. Das System mit einfacher Sensorfunktion liefert hingegen bei dieser schlechten Sichtweite ein davon signifikant unterschiedliches Ergebnis. Denn selbst eine Tiefpaßfilterung der Kennlinie K4 ergibt einen noch immer deutlich von demjenigen der Kennlinie K5 verschiedenen Verlauf.

Daraus folgt, daß die komplexere Sensorfusion mit Kalman-Filter vor allem bei schlechter Sichtweite deutlich bessere Schätzergebnisse auch für die Querposition $x_R$ von vor dem Fahrzeug befindlichen Objekten liefert als eine einfache Verknüpfung von Spurerkennung und Abstandsradar. Im Gegensatz zur einfachen Verknüpfung von optischer Spurerkennung und Abstandsradar erlaubt es somit die Sensorfusion mit Kalman-Filter, die Spurablage, d.h. die Querposition, vorausfahrender Fahrzeuge und anderer Objekte vor dem Fahrzeug auch bei schlechter Sichtweite sehr zuverlässig zu berechnen. Je nach Systemauslegung kann dabei für die Sensorfusion eine Vorverarbeitung bzw. Zielverfolgung anhand der Radardaten vorausgesetzt werden oder es können rohe Radardaten im Kalman-Filter verarbeitet werden. In letzterem Fall liefert die erfindungsgemäße Vorrichtung neben den Fahrspurdaten auch im Sinne minimaler Varianz optimal gefilterte Radarobjekte.

Die erfindungsgemäße Vorrichtung ermöglicht die Ermittlung fahrspurverlaufsindikativer Daten in Form der geschätzten Fahrbahnkrümmung $c_0$ und/oder der Querposition $x_R$ eines jeweiligen Objektes vor dem eigenen Fahrzeug in Echtzeit auch mit den in Fahrzeugen naturgemäß begrenzten Rechenkapazitäten. Es versteht sich, daß neben den beschriebenen weitere Realisierungen der erfindungsgemäßen Vorrichtung möglich sind. So kann eine noch komplexere Systemauslegung zur weiteren Verbesserung der Spurschätzung vorgesehen werden, bei welcher zur genaueren Messung des Richtungswinkels $\varphi$ eines jeweiligen Radarobjektes mit Hilfe des Abstandsradars die ungefähre Objektposition bestimmt und diese dann mittels eines Bildaufnahme- und Bildverarbeitungssystems mit höherer Genauigkeit ermittelt wird. Für die Bildverarbeitung kann ein einfaches Objekterkennungsverfahren eingesetzt werden, das z.B. auch die Symmetrie von Objekten, wie Fahrzeugen, ausnutzt, siehe z.B. hierzu A. Kühnle, Symmetry-based recognition of vehicle rears, Pattern Recognition Letters 12, April 1991, Seite 249. Des weiteren kann anstelle des Abstandsradarsystems eine andere Objektpositionssensorik verwendet werden, z.B. bei Vorhandensein einer ausreichenden Rechenleistung ein Stereobildaufnahme- und Stereobildverarbeitungssystem. Die in diesem Fall nicht mehr direkt meßbare Relativgeschwindigkeit kann dann als Zustand im Kalman-Filter beoachtet werden.

Eine weitere Möglichkeit der Fahrspurerkennung besteht in der Verwendung eines GPS und einer geeigneten digitalen Wegenetzkarte. Damit können die eigene Position sowie Koordinaten der aktuellen Fahrspur in einer Entfernung $L_{GPS}$ ermittelt werden, und das Meßgleichungssystem läßt sich um die Zeile

$$x_{GPS} = -x + \Delta\psi L_{GPS} + c_0 L^2{}_{GPS}/2 + c_1 L^3{}_{GPS}/6$$

erweitern.

Die erfindungsgemäße Vorrichtung kann aufgrund ihrer Eigenschaft, eine zuverlässige Schätzung des Fahrspurverlaufs durch Berücksichtigung stehender und/oder fahrender Objekte in einem geschlossenen Schätzalgorithmus zu liefern, unterstützend in Systemen zur automatischen Quer- und/oder Längsführung von Kraftfahrzeugen und in Warnsystemen, z.B. in einem Auffahrwarnsystem, eingesetzt werden.

**Patentansprüche**

1. Vorrichtung zur Ermittlung von für den Verlauf einer Fahrspur indikativen Daten, mit

   - einer Fahrspurerkennungssensorik (10) welche Fahrspurerkennungsmeßdaten liefert,
   - einer Objektpositionssensorik (10), welche wenigstens den Abstand (d) eines vor dem Fahrzeug befindlichen Objektes (4) und dessen Richtungswinkel ($\varphi$) bezüglich der Fahrzeugbewegungsrichtung erfaßt, und
   - einer Fahrzeugeigenbewegungssensorik (11) zur Erfassung der Fahrzeugeigenbewegung,
   **gekennzeichnet durch**
   - eine Schätzeinrichtung (12), der die Fahrspurerkennungsmeßdaten von der Fahrspurerkennungssensorik (10) und die Objektpositionsmeßdaten von der Objektpositionssensorik (10) sowie die Fahrzeugeigenbewegungsmeßdaten von der Fahrzeugeigenbewegungssensorik (11) zugeführt werden und die in Abhängigkeit von diesen Meßdaten die Fahrspurkrümmung ($c_0$) und/oder die Querposition ($x_R$) eines jeweiligen, von der Objektpositionssensorik detektierten Objektes relativ zur Fahrspur (2) durch Schätzung mittels eines vorgebbaren, ein dynamisches Fahrzeugbewegungsmodell beinhaltenden Schätzalgorithmus ermittelt.

2. Vorrichtung nach Anspruch 1, weiter
   **dadurch gekennzeichnet, daß**
   die geometrischen Beziehungen zwischen den von der Fahrspurerkennungssensorik und der Objektpositionssensorik erfaßten Meßgrößen als Meßgleichungen und deren dynamische Beziehungen als Zustandsgrößendifferentialgleichungen in den Schätzalgorithmus eingehen, wobei die Querposition ($x_R$) eines jeweiligen Objektes als zeitlich konstante Zustandsgröße in den Differentialgleichungen behandelt wird.

3. Vorrichtung nach Anspruch 2, weiter
   **dadurch gekennzeichnet, daß**
   der Abstand ($d_R$) und die Abstandsänderungsgeschwindigkeit ($v_{relR}$) als weitere Zustandsgrößen in den Schätzalgorithmus eingehen, wobei die Abstandsänderungsgeschwindigkeit als zeitlich konstante Zustandsgröße behandelt wird.

4. Vorrichtung nach einem der Ansprüche 1 bis 3, weiter
   **dadurch gekennzeichnet, daß**
   die Schätzeinrichtung ein Kalman-Filter (12) ist.

Fig. 1

Fig. 2

Fig. 3

Fig. 4